# EUROPEAN PATENT APPLICATION

(11) **EP 4 740 734 A1**
(43) Date of publication of application: **13.05.2026**
(21) Application number: 24306882.2
(22) Date of filing: 08.11.2024
(51) Int. Cl.: A01N 49/00, A01P 7/02

(54) **TREATMENT OF MITE INFESTATION**

(71) Applicant: Veto-Pharma, 91120 Palaiseau (FR)
(72) Inventor: PADE, Rémi, 72190 COULAINES (FR); POUGNAS, Jean-Luc, 33500 LIBOURNE (FR)
(74) Representative: Cabinet Beau de Loménie

(57) **Abstract**

The invention relates to bisabolol for use as a miticide agent, the use of bisabolol as a miticide, a method for reducing or preventing an infestation of an animal by a mite, comprising exposing the mite to bisabolol, a composition adapted for use as a miticide agent comprising bisabolol, a strip adapted for use in apiculture comprising bisabolol and to a hive comprising bisabolol.

## Description

### Technical field

The invention relates to bisabolol for use as a miticide agent, the use of bisabolol as a miticide, a method for reducing or preventing an infestation of an animal by a mite, comprising exposing the mite to bisabolol, a composition adapted for use as a miticide agent comprising bisabolol, a strip adapted for use in apiculture comprising bisabolol and to a hive comprising bisabolol.

### Prior art

Most animals can be infested with mites. This is the case for example of domestic animals such as dogs, cats, horses but also farm animals such as bees, cattle, sheep, poultry. Beyond the inconvenience caused to animals, mites can weaken the animal, transmit diseases or even cause the death of the animal.

Colony Collapse Disorder (CCD) is the name given to the phenomenon of abnormal and recurrent mortality observed since the 1990s in honeybee colonies around the world. Several explanations for this phenomenon have already been put forward, in particular the increase in parasitic diseases, and more particularly those caused by varroa and varroosis mites. This mite parasitizes bees and weakens colonies by reducing their immune defenses and their physiological state and can be a vector of viruses. The treatment of this parasite is a major issue for the survival of colonies and therefore the maintenance of pollination as well as the conservation of their productivity.

Today, everyone is aware of the impact of varroa mites on colonies. Many techniques are used to determine colony infestation. They are based in particular on the calculation of the percentage of bee infestation by removing the varroa mites attached to bees (percentage of phoretic varroa mites per 100 bees) using a detergent, a liquid comprising alcohol, CO₂ or icing sugar then counting the detached varroa mites [1]. Several more or less sophisticated devices have been described in the literature for removing varroa mites from bees, in particular the device described in Canadian patent application n°2,943,917 or the device described in Community model n°003419415-0001. The percentage of infestation corresponds to the number of varroa mites found on 100 adult bees. Depending on the time of year, it is possible to generate indicators:
- Between 0 and 2% infestation, the colony is doing well.
- At about 5% infestation, there is an effect on population dynamics and on honey production (about 25% less harvest during a honey flow, [2]).
- At about 10% or more infestation, the colony will die more or less quickly and will not survive the winter.

For the colonies to have a maximum of 5% infestation at the end of the season, it is very important that the infestation in the spring be less than 1%.

Despite the research and experimentation efforts carried out for more than thirty years, the current therapeutic offer available to fight against this mite is reduced to a few products and beekeepers feel helpless in the face of this scourge. However, the latter have some treatments to intervene to protect their colonies, but few compounds are really authorized to treat varroosis.

In France, there are to date only 6 active compounds for use against varroa with variable efficiency.

The treatments are currently divided into two categories: chemical and biological compounds, but they are also differentiated by their duration of treatment (long or short). Long treatments are generally done at the end of the apiculture season (mid-August) before the fatal varroa mite peak in August/September and can also be applied in spring in addition to limit summer infestation as much as possible. Short treatments must be carried out in the absence of brood (outside the summer season) and are used in addition to a long treatment to increase the efficiency of the latter.

There are three chemical compounds derived from synthetic molecules: amitraz, tau-fluvalinate and flumethrin.

There are three natural compounds used in organic apiculture: thymol, oxalic acid and formic acid.

Among them, some unfortunately see their efficiency decrease because of the increasing resistance of varroa mites to certain compounds used. This is particularly the case for the tau-fluvalinate and flumethrin compounds. In addition, the reduced number of treatments available does not allow enough alternatives in the context of effective health management.

These compounds have also shown their efficiency in treating infestations by mites in animals other than bees.

Research is therefore still necessary to identify new molecules, such as molecules that can be used in organic apiculture, that are effective against mites and without risk for the treated animals and for humans, in particular for combating varroa mites and without risk both for bee colonies and for the environment and the beekeeper, without degrading the quality of the honey for human consumption.

### Summary of the invention

According to a first aspect, the invention relates to bisabolol or a stereoisomer thereof for use as a miticide agent.

In some embodiments of the first aspect, the bisabolol or stereoisomer thereof is selected from the group consisting of a compound of Formula (I), bisabolol oxide A, CAS Registry Number 22567-36-8, and bisabolol oxide B, CAS Registry Number 55399-12-7, 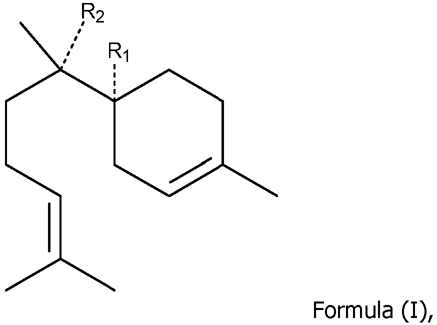 (R1, R2) represents (H, OH) or (OH, H).

In some embodiments of the first aspect, the bisabolol is a compound selected from the group comprising:
- α-bisabolol, CAS Registry Number 72691-24-8;
- (R,R)-α-bisabolol, CAS Registry Number 515-69-5;
- (+)-(αR,1R)-α-bisabolol, also known as (+)-α-Bisabolol, CAS Registry Number 23178-88-3;
- (-)-(αS,1S)-α-bisabolol, also known as (-)-α-Bisabolol, CAS Registry Number 23089-26-1;
- (R,S)-α-bisabolol, also known as *rel*-(α*R*,1*S*)-α,4-Dimethyl-α-(4-methyl-3-penten-1-yl)-3-cyclohexene-1-methanol, CAS Registry Number 72059-10-0;
- (+)-(αS,1R)-α-bisabolol, also known as (+)-*epi*-α-Bisabolol, CAS Registry Number 76738-75-5;
- (-)-(αR,1S)-α-bisabolol, also known as Anymol, CAS Registry Number 78148-59-1;
- β-bisabolol, also known as 1-(1,5-Dimethyl-4-hexen-1-yl)-4-methyl-3-cyclohexen-1-ol, CAS Registry Number 22567-45-9;
- (R,R)-β-bisabolol, also known as *ref*(1*R*)-1-[(1*R*)-1,5-Dimethyl-4-hexen-1-yl]-4-methyl-3-cyclohexen-1-ol, CAS Registry Number 100680-10-2;
- (1R,βR)-β-bisabolol, also known as (1*R*)-1-[(1*R*)-1,5-Dimethyl-4-hexen-1-yl]-4-methyl-3-cyclohexen-1-ol, CAS Registry Number 700358-60-7;
- (1S,βS)-β-bisabolol, CAS Registry Number 15352-77-9;
- (R,S)-β-bisabolol, also known as *epi*-β-Bisabolol, CAS Registry Number 235421-59-7;
- (1R,βS)-β-bisabolol, also known as (1*R*)-1-[(1*S*)-1,5-Dimethyl-4-hexen-1-yl]-4-methyl-3-cyclohexen-1-ol, CAS Registry Number 106035-75-0;
- (1S,βR)-β-bisabolol, also known as (1*S*)-1-[(1*R*)-1,5-Dimethyl-4-hexen-1-yl]-4-methyl-3-cyclohexen-1-ol, CAS Registry Number 106035-76-1;
- Bisabolol oxide A, CAS Registry Number 22567-36-8; and
- Bisabolol oxide B, CAS Registry Number 55399-12-7.

In some preferred embodiments of the first aspect, the bisabolol is (-)-(αS,1S)-α-bisabolol, CAS Registry Number 23089-26-1.

In some preferred embodiments of the first aspect, the bisabolol is bisabolol oxide A, CAS Registry Number 22567-36-8.

In some embodiments of the first aspect, the compound is for reducing or preventing a mite infestation in an animal, such as a bee.

In some embodiments of the first aspect, the mite is (i) *varroa* mite, such as *varroa destructor,* or (ii) *Tropilaelaps spp.,* such as *Tropilaelaps clareae* or *Tropilaelaps mercedesae.*

According to a second aspect, the invention relates to the use of bisabolol or a stereoisomer thereof, as defined in the first aspect, as a miticide agent.

In some embodiments of the second aspect, the compound is used for reducing or preventing a mite infestation in an animal, such as a bee.

According to a third aspect, the invention relates to a method for reducing or preventing a mite infestation in an animal, such as a bee, comprising exposing the animal to bisabolol or a stereoisomer thereof, as defined in the first aspect.

In some embodiments of the second and third aspects, the mite is (i) *varroa* mite, such as *varroa destructor,* or (ii) *Tropilaelaps spp.,* such as *Tropilaelaps clareae.*

According to a fourth aspect, the invention relates to a composition adapted for use as a miticide agent, said composition comprising (i) bisabolol or stereoisomer thereof, as defined in the first aspect, (ii) one or more attractant(s) for bees, and eventually (iii) one or more polymer(s) selected from the group consisting in a plastic material, a rubber, an adhesive, a resin and polyholoside fibers.

According to a fifth aspect, the invention relates to a strip adapted for use in apiculture, comprising (i) bisabolol or stereoisomer thereof, as defined in the first aspect, or (ii) a composition according to the fourth aspect.

According to a sixth aspect, the invention relates to a Beehive comprising (i) bisabolol or stereoisomer thereof, as defined in the first aspect, (ii) a composition according to the fourth aspect, and/or (iii) a strip according to fifth aspect.

### Detailed description

### Definitions

The term "bisabolol" refers to a set of sesquiterpene alcohol compounds.

According to the present invention, the bisabolol may be a compound selected from the group consisting of a compound of Formula (I), bisabolol oxide A, CAS Registry Number 22567-36-8, and bisabolol oxide B, CAS Registry Number 55399-12-7, 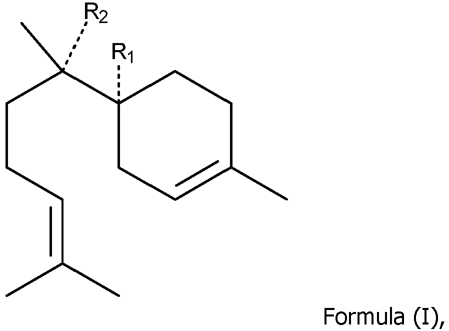 (R1, R2) represents (H, OH) or (OH, H).

For example, the bisabolol or stereoisomer thereof is a compound selected from the group comprising:
- α-bisabolol, CAS Registry Number 72691-24-8;
- (R,R)-α-bisabolol, CAS Registry Number 515-69-5;
- (+)-(αR,1R)-α-bisabolol, also known as (+)-α-Bisabolol, CAS Registry Number 23178-88-3;
- (-)-(αS,1S)-α-bisabolol, also known as (-)-α-Bisabolol, CAS Registry Number 23089-26-1;
- (R,S)-α-bisabolol, also known as *rel*-(αR,1S)-α,4-Dimethyl-α-(4-methyl-3-penten-1-yl)-3-cyclohexene-1-methanol, CAS Registry Number 72059-10-0;
- (+)-(αS,1R)-α-bisabolol, also known as (+)-*epi*-α-Bisabolol, CAS Registry Number 76738-75-5;
- (-)-(αR,1S)-α-bisabolol, also known as Anymol, CAS Registry Number 78148-59-1;
- β-bisabolol, also known as 1-(1,5-Dimethyl-4-hexen-1-yl)-4-methyl-3-cyclohexen-1-ol, CAS Registry Number 22567-45-9;
- (R,R)-β-bisabolol, also known as *rel*-(1*R*)-1-[(1*R*)-1,5-Dimethyl-4-hexen-1-yl]-4-methyl-3-cyclohexen-1-ol, CAS Registry Number 100680-10-2;
- (1R,βR)-β-bisabolol, also known as (1*R*)-1-[(1*R*)-1,5-Dimethyl-4-hexen-1-yl]-4-methyl-3-cyclohexen-1-ol, CAS Registry Number 700358-60-7;
- (1S,βS)-β-bisabolol, CAS Registry Number 15352-77-9;
- (R,S)-β-bisabolol, also known as *epi*-β-Bisabolol, CAS Registry Number 235421-59-7;
- (1R,βS)-β-bisabolol, also known as (1R)-1-[(15)-1,5-Dimethyl-4-hexen-1-yl]-4-methyl-3-cyclohexen-1-ol, CAS Registry Number 106035-75-0;
- (1S,βR)-β-bisabolol, also known as (1*S*)-1-[(1*R*)-1,5-Dimethyl-4-hexen-1-yl]-4-methyl-3-cyclohexen-1-ol, CAS Registry Number 106035-76-1;
- Bisabolol oxide A, CAS Registry Number 22567-36-8; and
- Bisabolol oxide B, CAS Registry Number 55399-12-7.

Preferably, the bisabolol or stereoisomer thereof is a compound selected from the group consisting of:
- α-bisabolol, CAS Registry Number 72691-24-8;
- (R,R)-α-bisabolol, CAS Registry Number 515-69-5;
- (+)-(αR,1R)-α-bisabolol, also known as (+)-α-Bisabolol, CAS Registry Number 23178-88-3;
- (-)-(αS,1S)-α-bisabolol, also known as (-)-α-Bisabolol, CAS Registry Number 23089-26-1;
- (R,S)-α-bisabolol, also known as *rel*-(α*R*,1*S*)-α,4-Dimethyl-α-(4-methyl-3-penten-1-yl)-3-cyclohexene-1-methanol, CAS Registry Number 72059-10-0;
- (+)-(αS,1R)-α-bisabolol, also known as (+)-*epi*-α-Bisabolol, CAS Registry Number 76738-75-5;
- (-)-(αR,1S)-α-bisabolol, also known as Anymol, CAS Registry Number 78148-59-1;
- β-bisabolol, also known as 1-(1,5-Dimethyl-4-hexen-1-yl)-4-methyl-3-cyclohexen-1-ol, CAS Registry Number 22567-45-9;
- (R,R)-β-bisabolol, also known as *rel*-(1*R*)-1-[(1*R*)-1,5-Dimethyl-4-hexen-1-yl]-4-methyl-3-cyclohexen-1-ol, CAS Registry Number 100680-10-2;
- (1R,βR)-β-bisabolol, also known as (1*R*)-1-[(1*R*)-1,5-Dimethyl-4-hexen-1-yl]-4-methyl-3-cyclohexen-1-ol, CAS Registry Number 700358-60-7;
- (1S,βS)-β-bisabolol, CAS Registry Number 15352-77-9;
- (R,S)-β-bisabolol, also known as *epi*-β-Bisabolol, CAS Registry Number 235421-59-7;
- (1R,βS)-β-bisabolol, also known as (1*R*)-1-[(1*S*)-1,5-Dimethyl-4-hexen-1-yl]-4-methyl-3-cyclohexen-1-ol, CAS Registry Number 106035-75-0;
- (1S,βR)-β-bisabolol, also known as (1*S*)-1-[(1*R*)-1,5-Dimethyl-4-hexen-1-yl]-4-methyl-3-cyclohexen-1-ol, CAS Registry Number 106035-76-1;
- Bisabolol oxide A, CAS Registry Number 22567-36-8; and
- Bisabolol oxide B, CAS Registry Number 55399-12-7.

The α-bisabolol, CAS Registry Number 72691-24-8, is the racemic mixture of (R,R)-α-bisabolol, CAS Registry Number 515-69-5, and (R,S)-α-bisabolol, CAS Registry Number 72059-10-0.

The (R,R)-α-bisabolol, CAS Registry Number 515-69-5, is the racemic mixture of (+)-(αR,1R)-α-bisabolol, CAS Registry Number 23178-88-3, and (-)-(αS,1S)-α-bisabolol, CAS Registry Number 23089-26-1. (-)-(αS,1S)-α-bisabolol, CAS Registry Number 23089-26-1, is commonly known as "levomenol".

The (R,S)-α-bisabolol, CAS Registry Number 72059-10-0, is the racemic mixture of (1R,βS)-β-bisabolol, CAS Registry Number 106035-75-0, and (1S,βR)-β-bisabolol, CAS Registry Number 106035-76-1.

The β-bisabolol, CAS Registry Number 22567-45-9 is the racemic mixture of (R,R)-β-bisabolol, CAS Registry Number 100680-10-2, and (R,S)-β-bisabolol, CAS Registry Number 235421-59-7.

The (R,R)-β-bisabolol, CAS Registry Number 100680-10-2, is the racemic mixture of (1R,βR)-β-bisabolol, CAS Registry Number 700358-60-7, and (1S,βS)-β-bisabolol, CAS Registry Number 15352-77-9.

The (R,S)-β-bisabolol, CAS Registry Number 235421-59-7, is the racemic mixture of (1R,βS)-β-bisabolol, CAS Registry Number 106035-75-0, and (1S,βR)-β-bisabolol, CAS Registry Number 106035-76-1.

The term "farnesene" refers to a set of six closely related chemical compounds which all are sesquiterpenes. The farnesene includes the two isomers named α-Farnesene and β-farnesene. The alpha form can exist as four stereoisomers that differ about the geometry of two of its three internal double bonds (the stereoisomers of the third internal double bond are identical). The beta isomer exists as two stereoisomers about the geometry of its central double bond. Two of the α-farnesene stereoisomers are reported to occur in nature: (E,E)-α-Farnesene and (Z,E)-α-Farnesene. β-Farnesene has one naturally occurring isomer: the (E)-β-Farnesene.

The α-Farnesene, CAS Registry Number 502-61-4, is a racemic mixture comprising four stereoisomers, including (E,E)-α-Farnesene and (Z,E)-α-Farnesene, CAS Registry Number 26560-14-5.

The β-Farnesene, CAS Registry Number 502-60-3, is a racemic mixture comprising the two stereoisomers (E)-β-Farnesene, CAS Registry Number 18794-84-8, and (Z)-β-Farnesene, CAS Registry Number 28973-97-9.

The term "farnesol" means the compound having the CAS n°4602-84-0. Farnesol is present in many extracts of plants, such as citronella, neroli, cyclamen, lemon grass, tuberose, rose, musk, balsam, chamomilla and tolu. Farnesol is a natural pesticide for mites and is a pheromone for several other insects.

The term "miticide agent" means a compound having the property of killing mites. For example, the compound may have the property of killing mites by paralysis. In a particular embodiment of the present invention, the miticide agent can be a "varroacid agent", that is to say a compound having the property of killing *varroa* mites.

In the context of the present invention, the mite can be:
- a mite of the *metastigmata* suborder (ticks), in particular of the *Ixodidae* family, such as *Ixodes ricinus, Ixodes scapularis, Rhipicephalus sanguineus* and *Boophilus microplus* (cattle tick), *Dermacentor variabilis*, *Amblyomma americanum*;
- a mite of the *Mesostigmata* suborder, in particular of the *Dermanyssidae* family, such as *Dermanyssus gallinae* (poultry louse) or of the *Varroidae* family, such as *Varroa*;
- a mite from the *Astigmata* suborder ("galls"), in particular from the *Sarcoptidae* family, such as *Sarcoptes scabiei* and *Notoedres cati* or from the *Psoroptidae* family, such as *Psoroptes ovis*, *Chorioptes bovis* and *Otodectes cynotis*; or
- a mite of the *Prostigmata* suborder, in particular of the *Demodicidae* family, such as *Demodex bovis* and *Demodex canis* or of the *Cheyletiellidae* family, such as *Cheyletiella yasguri.*

In a preferred embodiment of the present invention, the mite is *varroa* mite. The term "*varroa"* refers to an ectoparasitic bee mite. It parasitizes all stages of its development and affects the health of the bee then that of the bee colony, especially in a hive. In the context of the present invention, varroa is preferably *varroa destructor.*

In another preferred embodiment of the present invention, the mite is of the genus *Tropilaelaps spp.,* such as *Tropilaelaps clareae or Tropilaelaps mercedesae. Tropilaelaps* mites are statutory notifiable pests in the European Union. *Tropilaelaps* clareae and *Tropilaelaps* mercedesae are known to use bee as hosts.

The term "animal" means any animal that can be infested by a mite, for example, dog, cat, horse, poultry, cattle, sheep, bee.

The term "bee" means an insect of the order Hymenoptera and of the *Apis* genus. There are 4 species of bees: *Apis dorsata, Apis florea, Apis cerana* and *Apis mellifera.* In a particular embodiment of the invention, the bee is *Apismellifera.*

The term "hive" or "beehive" means a structure housing a colony of bees. The interior of the hive is made up of combs formed by hexagonal cells of beeswax. Bees use these cells for food storage (honey and pollen), and for population renewal (eggs, larvae and pupae). In apiculture, the hive is the living unit built by the beekeeper to accommodate a colony of bees. This is usually a wooden or plastic box.

The term "strip" means a strip made by cutting or braiding a flexible material. The flexible material can be, for example, a plastic material, a rubber, an adhesive, a resin or polyholoside fibers. The strip can come in different shapes. It can be, for example, a cat collar, a dog collar or a strip used in apiculture. Preferably, the strip is a strip adapted for use in apiculture, that is to say a non-circular strip, preferably a flat strip, having a size, a rigidity and a shape adapted so that the strip can be slip between the frames of a hive.

The present invention stems from the advantages demonstrated by the inventors of the miticidal effect of bisabolol.

### Second medical use, use and method

According to a first aspect, the invention relates to bisabolol or a stereoisomer thereof for use as a miticide agent.

According to a second aspect, the invention relates to the use of bisabolol or a stereoisomer thereof as a miticide agent.

In some embodiments of the first and second aspect, the use reduces or prevents a mite infestation in an animal, such as a bee. Particularly, the use reduces or prevent a mite infestation of a beehive.

According to a third aspect, the invention relates to a method for reducing or preventing a mite infestation in an animal, such as a bee, comprising exposing the animal to bisabolol or a stereoisomer thereof.

For the sake of simplification, in the following detailed description, the term "bisabolol" means "bisabolol or a stereoisomer thereof".

The bisabolol may be in a form of a composition (i.e., a composition comprising bisabolol), such as a pharmaceutical composition. The composition may be (i) in a solid form, such as a powder, a granulated powder, a tablet, a chew or a strip, (ii) in a semi-solid form, such as a gel or a paste, or (iii) in a liquid form, such as a solution, a suspension or an emulsion.

In some embodiments, the composition comprising bisabolol is in a liquid form and comprises up to 99% w/v of bisabolol, such as up to 95% w/v of bisabolol, such as up to 90% w/v of bisabolol, such as up to 80% w/v of bisabolol, such as up to 60% w/v of bisabolol, such as up to 50% w/v of bisabolol, such as up to 40% w/v of bisabolol, such as up to 30% w/v of bisabolol, such as up to 30% w/v of bisabolol, such as up to 20% w/v of bisabolol, such as up to 10% w/v of bisabolol, such as up to 9% w/v of bisabolol, such as up to 8% w/v of bisabolol, such as up to 7% w/v of bisabolol, such as up to 6% w/v of bisabolol, such as up to 5% w/v of bisabolol such as up to 4% w/v of bisabolol, such as up to 3% w/v of bisabolol, such as up to 2% w/v of bisabolol, such as from 1% to 99% w/v of bisabolol, such as from 1% to 95% w/v of bisabolol, such as from 1% to 90% w/v of bisabolol, such as from 1% to 80% w/v of bisabolol, such as from 1% to 70% w/v of bisabolol, such as from 1% to 60% w/v of bisabolol, such as from 1% to 50% w/v of bisabolol, such as from 1% to 40% w/v of bisabolol, such as from 1% to 30% w/v of bisabolol, such as from 1% to 20% w/v of bisabolol, such as from 1% to 10% w/v of bisabolol, such as from 1% to 9% w/v of bisabolol, such as from 1% to 8% w/v of bisabolol, such as from 1% to 7% w/v of bisabolol, such as from 1% to 6% w/v of bisabolol, or such as from 1% to 5% w/v of bisabolol.

In some embodiments, the composition comprising bisabolol is in a semi-solid form and comprises up to 95% w/w of bisabolol, such as up to 95% w/w of bisabolol, such as up to 90% w/w of bisabolol, such as up to 80% w/w of bisabolol, such as up to 60% w/w of bisabolol, such as up to 50% w/w of bisabolol, such as up to 40% w/w of bisabolol, such as up to 30% w/w of bisabolol, such as up to 30% w/w of bisabolol, such as up to 20% w/w of bisabolol, such as up to 10% w/w of bisabolol, such as up to 9% w/w of bisabolol, such as up to 8% w/w of bisabolol, such as up to 7% w/w of bisabolol, such as up to 6% w/w of bisabolol, such as up to 5% w/w of bisabolol, such as up to 4% w/w of bisabolol, such as up to 3% w/w of bisabolol, such as up to 2% w/w of bisabolol, such as from 1% to 90% w/w of bisabolol, such as from 1% to 80% w/w of bisabolol, such as from 1% to 70% w/w of bisabolol, such as from 1% to 60% w/w of bisabolol, such as from 1% to 50% w/w of bisabolol, such as from 1% to 40% w/w of bisabolol, such as from 1% to 30% w/w of bisabolol, such as from 1% to 20% w/w of bisabolol, such as from 1% to 10% w/w of bisabolol, such as from 1% to 9% w/w of bisabolol, such as from 1% to 8% w/w of bisabolol, such as from 1% to 7% w/w of bisabolol, such as from 1% to 6% w/w of bisabolol, or such as from 1% to 5% w/w of bisabolol.

In some other embodiments, the composition comprising bisabolol is in a solid form and comprises up to 75% w/w of bisabolol, such as up to 70% w/w of bisabolol, such as up to 60% w/w of bisabolol, such as up to 50% w/w of bisabolol, such as up to 40% w/w of bisabolol, such as up to 30% w/w of bisabolol, such as up to 20% w/w of bisabolol, such as up to 15% w/w of bisabolol, such as up to 10% w/w of bisabolol, such as up to 9% w/w of bisabolol, such as up to 8% w/w of bisabolol, such as up to 7% w/w of bisabolol, such as up to 6% w/w of bisabolol, such as up to 5% w/w of bisabolol, such as up to 4% w/w of bisabolol, such as up to 3% w/w of bisabolol, such as up to 2% w/w of bisabolol, such as from 1% to 50% w/w of bisabolol, such as from 1% to 50% w/w of bisabolol, such as from 1% to 40% w/w of bisabolol, such as from 1% to 30% w/w of bisabolol, such as from 1% to 20% w/w of bisabolol, such as from 1% to 15% w/w of bisabolol, such as from 1% to 10% w/w of bisabolol, such as from 1% to 9% w/w of bisabolol, such as from 1% to 8% w/w of bisabolol, such as from 1% to 7% w/w of bisabolol, such as from 1% to 6% w/w of bisabolol, or such as from 1% to 5% w/w of bisabolol.

The bisabolol can be diluted in a solvent. The solvent can be, for example, an alcohol, such as ethanol or methanol, a polyol, such as sorbitol or mannitol, an oil, such as vegetal oil, mineral oil or synthetic oil, a glycol, such as glycerin or macrogols, or a combination thereof.

In some embodiment, the bisabolol may be in the form of a composition comprising bisabolol, such as a composition according to the fourth aspect of the invention, as defined below.

The bisabolol may be impregnated in a strip and/or on a strip. It may be a strip according to the fifth aspect of the invention, as defined below.

In some embodiments, the reduction in mite infestation is a reduction of at least 25% of the number of living mites, such as living mites attached to an animal, preferably the reduction in mite infestation is a reduction of at least 30%, at least 35%, at least 40%, at least 45%, at least 50%, at least 55%, at least 60%, at least 65%, at least 70%, at least 75%, at least 80%, at least 85%, at least 90%, at least 95%, or even 100% of the number of living mites, such as living mites attached to an animal. Such a reduction is advantageously obtained in less than 24 hours after the treatment, for example in less than 12 hours, in less than 6 hours or even in less than 3 hours after the treatment. In real conditions, the reduction can be obtained after a few days or even a few weeks. The reduction in mite infestation can be measured easily, for example for infestation of bees by varroa mites, by taking 100 bees from the beehive and counting the number of varroa mites attached to them. It is then easy to compare the number of varroa mites attached to the bees between a treated beehive and an untreated beehive or for a beehive before treatment versus the same beehive after treatment. A 50% reduction in mite infestation means that the treated animal carries half as many mites as the untreated animal. A reduction of 100% means that the animal no longer carries mites.

In some embodiments, the composition comprising bisabolol does not comprise farnesene. The applicant has shown that, even if farnesene is known as a natural miticide agent, it can also affect the survival of bees, which is not desired in the present invention, in particular for treating mite infestation of a beehive.

In a specific embodiment, the composition comprising bisabolol comprises a miticide agent other than bisabolol. Said miticide agent may be (i) a chemical compound derived from a synthetic molecule, such as amitraz, tau-fluvalinate or flumethrin, and/or (ii) a natural compound used in organic apiculture, such as thymol, oxalic acid or formic acid.

In a specific embodiment, the composition comprises oxalic acid.

In some embodiments, the composition comprising bisabolol does not comprise farnesol.

In some embodiments, considering that farnesene and farnesol are present in many extracts of plants, such as essential oils, the composition comprising bisabolol does not consist in an extract of plant(s), such as an essential oil. For example, the composition comprising bisabolol is not an extract of a plant selected from the group consisting of citronella, neroli, cyclamen, lemon grass, tuberose, rose, musk, balsam, chamomilla and tolu.

Advantageously, the bisabolol does not affect the survival of the animal. When the animal is a bee, preferably less than 20% of the bees are killed by the bisabolol or the composition comprising bisabolol, preferably less than 15%, less than 10%, less than 5%, less than 4%, less than 3%, less than 2%, or less than 1%, preferably about 0% of the bees are killed by the bisabolol.

The exposure to the compound can be done by contacting the mite and/or the animal with bisabolol, for example by evaporation, by sublimation, by smoking, by dusting or by vaporization of the bisabolol. The exposure of the mite can also take place after the animal has ingested the bisabolol.

The exposure can take place to prevent the infestation and/or to treat the infestation by the mite. When the animal is a bee and the mite is a varroa mite, the exposure to bisabolol take place, for example, in spring if the varroa populations in the apiary are too high, at the beginning of summer for beekeepers wishing to leave the supers to obtain buckwheat or calluna honey, or at the end of summer just after the last honey flow (end of July/mid-August). The exposure can also take place in winter.

The bisabolol can be applied to at least a part of the animal.

When the animal is a bee and the mite is a varroa mite or a mite is of the genus *Tropilaelaps spp.,* bisabolol can be applied to at least a part of the beehive, for example at the entrance of the beehive on a device placed in the beehive, for example a strip. The bisabolol can also be applied directly on the bees and/or directly on the mites. The form in which bisabolol is applied can vary, as long as it allows having the desired miticide effect, for example in a liquid form, a semi-solid form, or a solid form.

In a particular embodiment, bisabolol is combined, e.g., in a composition, with one or more attractants for bees. Attractant(s) for bees are widely described in the literature, for example in patent EP0499510B1. Among the attractant(s) for bees, mention may be made, for example, of geraniol, citral, nerolic acid, lemongrass, farnesol and/or the constituents of royal jelly such as adipic acid, pinelic acid, suberic acid and/or 4-hydroxybenzoic acid. (See the article "Compounds which affect the behavior of the honeybee Apis mellifera - Bee world 69-1988-104-123). The addition of one or more attractants for bees to the compound of formula (I) allows to attract bees. The bees will therefore naturally move towards bisabolol and therefore find themselves in contact with bisabolol. Consequently, the bees will self-apply bisabolol to at least part of their body.

### Composition

According to a fourth aspect, the invention relates to a composition adapted for use as a miticide agent, said composition comprising (i) bisabolol or stereoisomer thereof, as defined in the first aspect, (ii) one or more attractant(s) for bees, and eventually (iii) one or more polymer(s) selected from the group consisting in a plastic material, a rubber, an adhesive, a resin and polyholoside fibers.

In a specific embodiment, the composition of the invention may comprise a miticide agent other than bisabolol. Said miticide agent may be (i) a chemical compound derived from a synthetic molecule, such as amitraz, tau-fluvalinate or flumethrin, and/or (ii) a natural compound used in organic apiculture, such as thymol, oxalic acid or formic acid.

In a specific embodiment, the composition comprises oxalic acid.

The plastic material may be a copolymer of ethylene and vinyl acetate (EVA copolymer).

The resin can be a natural and/or synthetic resin.

The polyholoside fibers may be cellulose, starch, inulin, or a mixture thereof.

Attractants for bees are widely described in the literature, as disclosed above.

The composition of the invention must contain enough bisabolol to allow the reduction of the infestation by the mite, preferably a reduction of at least 25%, preferably of at least 30%, at least 35%, at least 40%, at least 45%, at least 50%, at least 55%, at least 60%, at least 65%, at least 70%, at least 75%, at least 80%, at least 85%, at least 90%, at least 95% or even 100% of the number of live mites attached to the animal. Such a reduction is advantageously obtained less than 24 hours (h) after the treatment, for example less than 12 hours, less than 6 hours or even less than 3 hours after the treatment. In a particular embodiment, such a reduction can be obtained in a hive a few days after the application of the treatment, for example at least one week, at least 2 weeks, at least 3 weeks, at least 4 weeks, at least 5 weeks, at least 6 weeks after the application of the treatment, for example up to 12 weeks after the application of the treatment.

The composition of the invention should not be toxic to bees. Preferably, less than 20% of the bees are killed when they are contacted with the composition of the invention, preferably less than 15%, less than 10%, less than 5%, less than 4%, less than 2%, less than 1%, ideally no bees (0%) are killed. The concentration of bisabolol is therefore adapted for killing mites without being toxic for the animal. The person skilled in the art can easily adapt the concentration according to the needs.

The composition of the invention may be (i) in a solid form, such as a powder, a granulated powder, a tablet, a chew or a strip, (ii) in a semi-solid form, such as a gel or a paste, or (iii) in a liquid form, such as a solution, a suspension or an emulsion.

In some embodiments, the composition of the invention is in a liquid form and comprises up to 99% w/v of bisabolol, such as up to 95% w/v of bisabolol, such as up to 90% w/v of bisabolol, such as up to 80% w/v of bisabolol, such as up to 60% w/v of bisabolol, such as up to 50% w/v of bisabolol, such as up to 40% w/v of bisabolol, such as up to 30% w/v of bisabolol, such as up to 30% w/v of bisabolol, such as up to 20% w/v of bisabolol, such as up to 10% w/v of bisabolol, such as up to 9% w/v of bisabolol, such as up to 8% w/v of bisabolol, such as up to 7% w/v of bisabolol, such as up to 6% w/v of bisabolol, such as up to 5% w/v of bisabolol, such as up to 4% w/v of bisabolol, such as up to 3% w/v of bisabolol, such as up to 2% w/v of bisabolol, such as from 1% to 99% w/v of bisabolol, such as from 1% to 95% w/v of bisabolol, such as from 1% to 90% w/v of bisabolol, such as from 1% to 80% w/v of bisabolol, such as from 1% to 70% w/v of bisabolol, such as from 1% to 60% w/v of bisabolol, such as from 1% to 50% w/v of bisabolol, such as from 1% to 40% w/v of bisabolol, such as from 1% to 30% w/v of bisabolol, such as from 1% to 20% w/v of bisabolol, such as from 1% to 10% w/v of bisabolol, such as from 1% to 9% w/v of bisabolol, such as from 1% to 8% w/v of bisabolol, such as from 1% to 7% w/v of bisabolol, such as from 1% to 6% w/v of bisabolol, or such as from 1% to 5% w/v of bisabolol.

In some embodiments, the composition of the invention is in a semi-solid form and comprises up to 95% w/w of bisabolol, such as up to 95% w/w of bisabolol, such as up to 90% w/w of bisabolol, such as up to 80% w/w of bisabolol, such as up to 60% w/w of bisabolol, such as up to 50% w/w of bisabolol, such as up to 40% w/w of bisabolol, such as up to 30% w/w of bisabolol, such as up to 30% w/w of bisabolol, such as up to 20% w/w of bisabolol, such as up to 10% w/w of bisabolol, such as up to 9% w/w of bisabolol, such as up to 8% w/w of bisabolol, such as up to 7% w/w of bisabolol, such as up to 6% w/w of bisabolol, such as up to 5% w/w of bisabolol, such as up to 4% w/w of bisabolol, such as up to 3% w/w of bisabolol, such as up to 2% w/w of bisabolol, such as from 1% to 90% w/w of bisabolol, such as from 1% to 80% w/w of bisabolol, such as from 1% to 70% w/w of bisabolol, such as from 1% to 60% w/w of bisabolol, such as from 1% to 50% w/w of bisabolol, such as from 1% to 40% w/w of bisabolol, such as from 1% to 30% w/w of bisabolol, such as from 1% to 20% w/w of bisabolol, such as from 1% to 10% w/w of bisabolol, such as from 1% to 9% w/w of bisabolol, such as from 1% to 8% w/w of bisabolol, such as from 1% to 7% w/w of bisabolol, such as from 1% to 6% w/w of bisabolol, or such as from 1% to 5% w/w of bisabolol.

In some other embodiments, the composition of the invention is in a solid form and comprises up to 75% w/w of bisabolol, such as up to 70% w/w of bisabolol, such as up to 60% w/w of bisabolol, such as up to 50% w/w of bisabolol, such as up to 40% w/w of bisabolol, such as up to 30% w/w of bisabolol, such as up to 20% w/w of bisabolol, such as up to 15% w/w of bisabolol, such as up to 10% w/w of bisabolol, such as up to 9% w/w of bisabolol, such as up to 8% w/w of bisabolol, such as up to 7% w/w of bisabolol, such as up to 6% w/w of bisabolol, such as up to 5% w/w of bisabolol, such as up to 4% w/w of bisabolol, such as up to 3% w/w of bisabolol, such as up to 2% w/w of bisabolol, such as from 1% to 50% w/w of bisabolol, such as from 1% to 50% w/w of bisabolol, such as from 1% to 40% w/w of bisabolol, such as from 1% to 30% w/w of bisabolol, such as from 1% to 20% w/w of bisabolol, such as from 1% to 15% w/w of bisabolol, such as from 1% to 10% w/w of bisabolol, such as from 1% to 9% w/w of bisabolol, such as from 1% to 8% w/w of bisabolol, such as from 1% to 7% w/w of bisabolol, such as from 1% to 6% w/w of bisabolol, or such as from 1% to 5% w/w of bisabolol.

In some embodiments, the composition of the invention does not comprise farnesene.

In some embodiments, the composition of the invention does not comprise farnesol.

In some embodiments, the composition of the invention does not consist in a plant extract or an essential oil, i.e., the composition of the invention is not a plant extract or an essential oil that naturally comprise bisabolol such as an extract of a plant selected from the group consisting of citronella, neroli, cyclamen, lemon grass, tuberose, rose, musk, balsam, chamomilla and tolu.

In a specific embodiment, the composition is a nutritional composition for bees. The nutritional composition for bees can be in different forms, for example in the form of syrup for bees, a sweet paste or a protein paste for bees.

### Strip

According to a fifth aspect, the invention relates to a strip adapted for use in apiculture, comprising (i) bisabolol or stereoisomer thereof, as defined in the first aspect, or (ii) a composition according to the fourth aspect.

The strips are conventionally used in the veterinary field in miticide treatments, for example in the form of collars for dogs or cats. Strips are also conventionally used in apiculture in varroacid treatments. Several strips adapted for apiculture are commercially available (e.g. APIVAR^{®} device).

In general, the miticide agent (i.e., bisabolol) migrates from the inside of the strip to the surface thereof to be in contact with the animal and/or the mite. This is the case for the APIVAR^{®} product. The bees rub on the strip and the miticide agent is therefore transferred from the strip to the bees. The miticide agent is then distributed among the bees by contact. Varroa mites attached to the bees are thus exposed to the miticide agent leading to the death of varroa mites. Varroa mites then detach from the bee. In a beehive, varroa mites detached from the bees fall to the bottom of the beehive.

The strip of the invention can therefore be adapted for use in apiculture. In particular, it has a size, rigidity and shape adapted to be able to slip it into a beehive, that is to say so that the strip can slip between the frames of a beehive. An adapted shape corresponds to a non-circular or non-curved strip, preferably a flat strip. An adapted size corresponds to a strip whose width is comprised between 1 cm and 20 cm, preferably from 4 cm to 20 cm and the length is comprised between 5 cm and 50 cm, preferably between 15 cm and 25 cm. The thickness of the strip is ideally comprised between 0.5 mm and 5 mm, preferably it is 1 mm to 2 mm thick. An adapted rigidity corresponds to a sufficient rigidity to break the bridges of beeswax which can be formed between the frames of a beehive.

The strip can be impregnated and/or coated with the miticide agent (i.e., bisabolol), for example by spraying the strip with said miticide agent. The strip can also be manufactured from a mixture already comprising the miticide agent, for example by extrusion of this mixture to give it the desired shape or by molding.

### Beehive

According to a sixth aspect, the invention relates to a Beehive comprising (i) bisabolol or stereoisomer thereof, as defined in the first aspect, (ii) a composition according to the fourth aspect, and/or (iii) a strip according to fifth aspect.

In a particular embodiment, all or part of the beehive is covered with the miticide agent (i.e., bisabolol), for example by spraying the hive with said compound.

In another particular embodiment, the beehive comprises a colony of bees and the colony of bees is covered with the miticide agent, for example by spraying the colony with said miticide agent.

In another particular embodiment, the beehive comprises one or more strips according to the fifth aspect.

### Description of the Figures

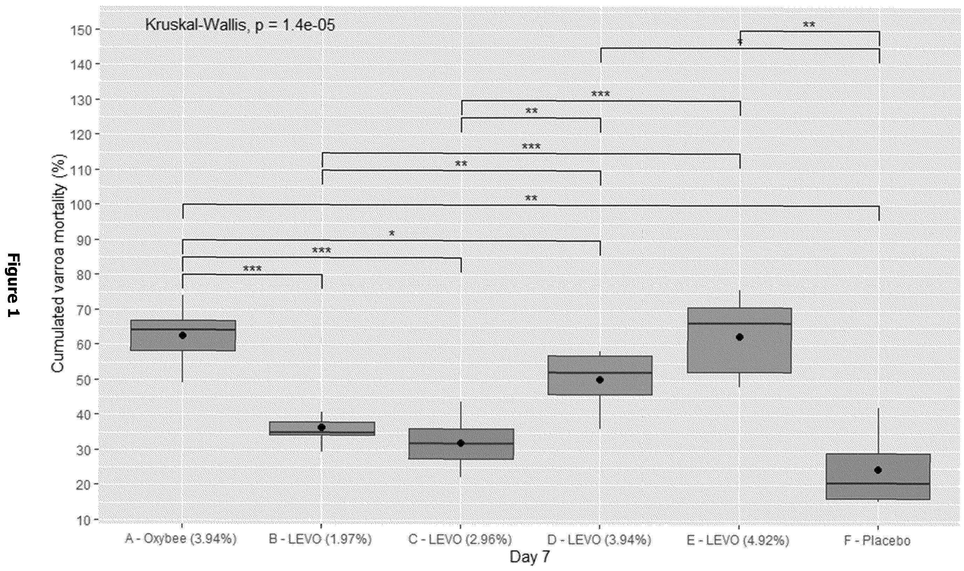

Figure 1 represents the cumulated varroa mortality in beehives after 7 days of treatment with A - Oxybee^{®} (Oxalic acid 3.94% w/v), B - Levomenol (1.97% w/v), C - Levomenol (2.96% w/v), D - Levomenol (3.94% w/v), E - Levomenol (4.92% w/v), or F - Placebo.

### EXAMPLES

### Example 1: demonstration of the miticidal effect of Levomenol (CAS Registry Number 23089-26-1) against varroa destructor

### Materials and methods

### Preparation of varroa mites

About 300 bees (*Apis mellifera*) infected with *varroa destructor* were taken from a hive superinfected with *varroa destructor.* The bees were then placed in a device allowing to detach varroa mites attached to the bees (device described in Community model n°003419415-0001) filled with powdered sugar. The device was stirred for 2 minutes to sample the varroa mites attached from the bees. The powdered sugar allows interfering between the bee and the varroa mite that was attached thereto. Varroa mites were harvested with powdered sugar because they passed through the holes in the device, unlike bees. The varroa mites were then separated from the powdered sugar.

The varroa mites thus recovered were dispersed in boxes (10 varroa mites per box). Two boxes were used to test each compound at the same dose, in order to have data for 20 varroa mites.

### Preparation of the bees

The bees were harvested from hives which had not undergone any treatment during the last 6 months in order to be sure that the effect of the experiments did not come from a previous treatment.

The bees were then dispersed in the boxes (10 per box). At least two boxes were used to test the same compound at the same dose, in order to have data for at least 20 bees.

The bees were then put to sleep for a few minutes using CO₂ (flow of 3 liters for 20 seconds) in order to deposit 1 pL of the solution to be tested (pure solvent or a composition comprising the compound to be tested) on their thorax using a pipette. The bees were unconscious for the time the solution to be tested was deposited, around three minutes, then they woke up.

After thoracic deposition of the solution to be tested, the 10 bees from the same box were transferred to a box containing the 10 varroa mites (cf. "Preparation of varroa mites" above). Liquid sugar was left in each of the boxes to feed the bees during the observations. The series of boxes were then placed in an incubator at 25°C with a humidity of 50% in order to simulate hive conditions as closely as possible. It was made sure that after 5 minutes all the varroa mites were attached to the bees and all the bees woke up.

### Effect of the compound on varroa mites and the bees

The mortality of varroa mites and bees was then monitored at 5 minutes, 2 hours, 4 hours and 24 hours after application of the solution to be tested to the bees. Dead varroa mites correspond to varroa mites detached from the bees. Dead bees correspond to bees which no longer move, and which are often placed on their back or side.

### Test of the solvents used (Ethanol)

Ethanol was tested in order to be sure that it had no (positive or negative) impact on the results.

### Results

The results are shown in Tables 1 and 2. Ethanol did not prove to be significantly toxic either for varroa mites or for bees.

### Conclusion

Ethanol had no impact on the viability of bees and varroa mites. It can therefore be used to dilute the tested compounds.

### Test of the compounds

### Tested compounds

The following compositions were applied to the thorax of the bees:
- Oxalic acid at 10 µg/µL, 25 µg/µL or 50 µg/µL.
- Levomenol at 1 µg/µL, 10 µg/µL, 20 µg/µL, 30 µg/µL, 40 µg/µL, 50 µg/µL or 100 µg/µL.

### Results

Oxalic acid: between 20% and more than 60% of the varroa mites were killed after 24 hours, and 0% of the bees were killed (in Tables 1 and 2). As expected, oxalic acid is effective as a varroacid agent. Oxalic acid is a positive control.

Levomenol: the results are presented in Tables 1 and 2. At concentrations between 20 µg/µL and 100 µg/µL, the mortality of varroa mites reached about 100% after 24 hours, and 0% of the bees were killed (except 1 bee was killed at the concentration 40 µg/µL).

Looking at equivalent concentrations (i.e. 10µg/µL and 50µg/µL) of Levomenol and oxalic acid, it appears that Levomenol is more effective to kill varroa mite (30% varroa mortality for Levomenol at 10µg/µL after 24h compared to 20% varroa mortality for oxalic acid and 100% varroa mortality for Levomenol at 50µg/µL after 24h compared to 65% varroa mortality for axalic acid).

**Table 1: Varroa mortality with Levomenol or oxalic acid**

| | Varroa mortality | | | | | | | |
|---|---|---|---|---|---|---|---|---|
| Modality | 5 min | Mean | 2 H | Mean | 4 H | Mean | 24 H | Mean |
| Negative control (1) | 0 | 0,00% | 0 | 0,00% | 0 | 0,00% | 0 | 0,00% |
| Negative control (2) | 0 | | 0 | | 0 | | 0 | |
| Ethanol solvent (1) | 0 | 0,00% | 0 | 3,33% | 0 | 5,00% | 0 | 13,33% |
| Ethanol solvent (2) | 0 | | 0 | | 0 | | 0 | |
| Ethanol solvent (3) | 0 | | 0 | | 0 | | 0 | |
| Ethanol solvent (4) | 0 | | 0 | | 0 | | 0 | |
| Ethanol solvent (5) | 0 | | 2 | | 3 | | 8 | |
| Ethanol solvent (6) | 0 | | 0 | | 0 | | 0 | |
| Levomenol 100µg/µL (1) | 0 | 0,00% | 8 | 70,00% | 10 | 95,00% | 10 | 100,00% |
| Levomenol 100µg/µL (2) | 0 | | 6 | | 9 | | 10 | |
| Levomenol 50µg/µL (1) | 0 | 0,00% | 6 | 76,67% | 10 | 98,33% | 10 | 100,00% |
| Levomenol 50µg/µL (2) | 0 | | 3 | | 10 | | 10 | |
| Levomenol 50µg/µL (3) | 0 | | 9 | | 10 | | 10 | |
| Levomenol 50µg/µL (4) | 0 | | 9 | | 9 | | 10 | |
| Levomenol 50µg/µL (5) | 0 | | 10 | | 10 | | 10 | |
| Levomenol 50µg/µL (6) | 0 | | 9 | | 10 | | 10 | |
| Levomenol 40µg/µL (1) | 0 | 0,00% | 8 | 85,00% | 10 | 92,50% | 10 | 97,50% |
| Levomenol 40µg/µL (2) | 0 | | 9 | | 9 | | 10 | |
| Levomenol 40µg/µL (3) | 0 | | 9 | | 10 | | 10 | |
| Levomenol 40µg/µL (4) | 0 | | 8 | | 8 | | 9 | |
| Levomenol 30µg/µL (1) | 0 | 0,00% | 9 | 92,50% | 10 | 100,00% | 10 | 100,00% |
| Levomenol 30µg/µL (2) | 0 | | 10 | | 10 | | 10 | |
| Levomenol 30µg/µL (3) | 0 | | 10 | | 10 | | 10 | |
| Levomenol 30µg/µL (4) | 0 | | 8 | | 10 | | 10 | |
| Levomenol 20µg/µL (1) | 0 | 0,00% | 8 | 77,50% | 10 | 97,50% | 10 | 100,00% |
| Levomenol 20µg/µL (2) | 0 | | 8 | | 10 | | 10 | |
| Levomenol 20µg/µL (3) | 0 | | 9 | | 10 | | 10 | |
| Levomenol 20µg/µL (4) | 0 | | 6 | | 9 | | 10 | |
| Levomenol 10µg/µL (1) | 0 | 0,00% | 0 | 30,00% | 0 | 35,00% | 2 | 30,00% |
| Levomenol 10µg/µL (2) | 0 | | 2 | | 2 | | 2 | |
| Levomenol 10µg/µL (3) | 0 | | 5 | | 5 | | 5 | |
| Levomenol 10µg/µL (4) | 0 | | 3 | | 3 | | 3 | |
| Levomenol 10µg/µL (5) | 0 | | 3 | | 4 | | 3 | |
| Levomenol 10µg/µL (6) | 0 | | 5 | | 7 | | 3 | |
| Levomenol 1µg/µL (1) | 0 | 0,00% | 0 | 0,00% | 0 | 0,00% | 0 | 5,00% |
| Levomenol 1µg/µL (2) | 0 | | 0 | | 0 | | 1 | |
| Oxalic acid 50µg/µL (1) | 0 | 0,00% | 0 | 0,00% | 1 | 5,00% | 6 | 65,00% |
| Oxalic acid 50µg/µL (2) | 0 | | 0 | | 0 | | 7 | |
| Oxalic acid 25µg/µL (1) | 0 | 0,00% | 0 | 0,00% | 1 | 15,00% | 4 | 55,00% |
| Oxalic acid 25µg/µL (2) | 0 | | 0 | | 2 | | 7 | |
| Oxalic acid 10µg/µL (1) | 0 | 0,00% | 0 | 5,00% | 0 | 5,00% | 3 | 20,00% |
| Oxalic acid 10µg/µL (2) | 0 | | 1 | | 1 | | 1 | |

**Table 2: Bee mortality with Levomenol or oxalic acid**

| | Bee mortality | | | | | | | |
|---|---|---|---|---|---|---|---|---|
| Modality | 5 min | Mean | 2 H | Mean | 4 H | Mean | 24 H | Mean |
| Negative control (1) | 0 | 0,00% | 0 | 0,00% | 0 | 0,00% | 0 | 0,00% |
| Negative control (2) | 0 | | 0 | | 0 | | 0 | |
| Ethanol solvent (1) | 0 | 0,00% | 0 | 0,00% | 0 | 1,67% | 0 | 1,67% |
| Ethanol solvent (2) | 0 | | 0 | | 0 | | 0 | |
| Ethanol solvent (3) | 0 | | 0 | | 0 | | 0 | |
| Ethanol solvent (4) | 0 | | 0 | | 0 | | 0 | |
| Ethanol solvent (5) | 0 | | 0 | | 1 | | 1 | |
| Ethanol solvent (6) | 0 | | 0 | | 0 | | 0 | |
| Levomenol 100µg/µL (1) | 0 | 0,00% | 0 | 0,00% | 0 | 0,00% | 0 | 0,00% |
| Levomenol 100µg/µL (2) | 0 | | 0 | | 0 | | 0 | |
| Levomenol 50µg/µL (1) | 0 | 0,00% | 0 | 0,00% | 0 | 0,00% | 0 | 0,00% |
| Levomenol 50µg/µL (2) | 0 | | 0 | | 0 | | 0 | |
| Levomenol 50µg/µL (3) | 0 | | 0 | | 0 | | 0 | |
| Levomenol 50µg/µL (4) | 0 | | 0 | | 0 | | 0 | |
| Levomenol 50µg/µL (5) | 0 | | 0 | | 0 | | 0 | |
| Levomenol 50µg/µL (6) | 0 | | 0 | | 0 | | 0 | |
| Levomenol 40µg/µL (1) | 0 | 0,00% | 0 | 5,00% | 0 | 5,00% | 0 | 5,00% |
| Levomenol 40µg/µL (2) | 0 | | 0 | | 0 | | 0 | |
| Levomenol 40µg/µL (3) | 0 | | 0 | | 0 | | 0 | |
| Levomenol 40µg/µL (4) | 0 | | 2 | | 2 | | 2 | |
| Levomenol 30µg/µL (1) | 0 | 0,00% | 0 | 0,00% | 0 | 0,00% | 0 | 0,00% |
| Levomenol 30µg/µL (2) | 0 | | 0 | | 0 | | 0 | |
| Levomenol 30µg/µL (3) | 0 | | 0 | | 0 | | 0 | |
| Levomenol 30µg/pL (4) | 0 | | 0 | | 0 | | 0 | |
| Levomenol 20µg/pL (1) | 0 | 0,00% | 0 | 0,00% | 0 | 0,00% | 0 | 0,00% |
| Levomenol 20µg/µL (2) | 0 | | 0 | | 0 | | 0 | |
| Levomenol 20µg/µL (3) | 0 | | 0 | | 0 | | 0 | |
| Levomenol 20µg/µL (4) | 0 | | 0 | | 0 | | 0 | |
| Levomenol 10µg/µL (1) | 0 | 0,00% | 0 | 0,00% | 0 | 0,00% | 0 | 0,00% |
| Levomenol 10µg/µL (2) | 0 | | 0 | | 0 | | 0 | |
| Levomenol 10µg/µL (3) | 0 | | 0 | | 0 | | 0 | |
| Levomenol 10µg/µL (4) | 0 | | 0 | | 0 | | 0 | |
| Levomenol 10µg/µL (5) | 0 | | 0 | | 0 | | 0 | |
| Levomenol 10µg/µL (6) | 0 | | 0 | | 0 | | 0 | |
| Levomenol 1µg/µL (1) | 0 | 0,00% | 0 | 0,00% | 0 | 0,00% | 0 | 0,00% |
| Levomenol 1µg/µL (2) | 0 | | 0 | | 0 | | 0 | |
| Oxalic acid 50µg/µL (1) | 0 | 0,00% | 0 | 0,00% | 0 | 0,00% | 0 | 0,00% |
| Oxalic acid 50µg/µL (2) | 0 | | 0 | | 0 | | 0 | |
| Oxalic acid 25µg/µL (1) | 0 | 0,00% | 0 | 0,00% | 0 | 0,00% | 0 | 0,00% |
| Oxalic acid 25µg/µL (2) | 0 | | 0 | | 0 | | 0 | |
| Oxalic acid 10µg/µL (1) | 0 | 0,00% | 0 | 0,00% | 0 | 0,00% | 0 | 0,00% |
| Oxalic acid 10µg/µL (2) | 0 | | 0 | | 0 | | 0 | |

### Example 2: demonstration of the miticidal effect of Levomenol (CAS Registry Number 23089-26-1) against varroa destructor in-hive

### Materials and methods

Forty-four Dadant hives have been used for the purpose of this study. 5 groups of 8 hives and 1 group of 4 hives have so been set-up.

Groups have been homogenized before the beginning of the study and the colonies were broodless at the treatment application (queen caging at least 3 weeks before treatment application).

The different treatment groups were:
- A - Oxybee^{®} (Oxalic acid 3.94% w/v)
- B - Levomenol (1.97% w/v)
- C - Levomenol (2.96% w/v)
- D - Levomenol (3.94% w/v)
- E - Levomenol (4.92% w/v)
- F - Placebo

The different product applied were applied on a liquid form per trickling (5mL per space between frame occupied by bees). Each treatment period was 7 days and was followed by a follow-up treatment with Oxybee^{®} for another 7 days.

### Results

The results, presented in Figure 1, shows the distribution of the cumulated mean efficacy after the 7 days treatment period. At the end of the 7 days treatment, groups A, D and E showed a higher efficacy compared to the other groups. Groups A and E achieved the same efficacy rate after the 7 days of treatment. Group D showed a slightly lower efficacy compared to group A but could be explained by the group size.

We can conclude from this study that Levomenol, particularly at the tested concentration of 4,92% in solution showed a comparative efficacy rate compared to commercial formulation of oxalic acid.

### Example 3: demonstration of the miticidal effect of Bisabolol oxide A (CAS Registry Number 22567-36-8) against varroa destructor

The protocol was identical to the protocol disclosed in Example 1, except that Bisabolol oxide A was tested at 1 µg/µL, 10 µg/µL, 50 µg/µL or 100 µg/µL.

### Results

The results are presented in Tables 3 and 4. At concentrations of 50 µg/µL and 100 µg/µL, the mortality of varroa mites reached respectively about 20% and 90% after 24 hours, and only one bee was killed at 100 µg/µL.

**Table 3: Varroa mortality with bisabolol oxide A**

| | Varroa mortality | | | | | | | |
|---|---|---|---|---|---|---|---|---|
| Modality | 5 min | Mean | 2 H | Mean | 4 H | Mean | 24 H | Mean |
| Negative control (1) | 0 | 0,00% | 0 | 0,00% | 0 | 0,00% | 0 | 0,00% |
| Negative control (2) | 0 | | 0 | | 0 | | 0 | |
| Ethanol solvent (1) | 0 | 0,00% | 0 | 0,00% | 1 | 3,33% | 1 | 3,33% |
| Ethanol solvent (2) | 0 | | 0 | | 0 | | 0 | |
| Ethanol solvent (3) | 0 | | 0 | | 0 | | 0 | |
| Bisabolol Oxide A 100µg/µL (1) | 0 | 0,00% | 2 | 13,33% | 4 | 33,33% | 10 | 90,00% |
| Bisabolol Oxide A 100µg/µL (2) | 0 | | 1 | | 3 | | 9 | |
| Bisabolol Oxide A 100µg/µL (3) | 0 | | 1 | | 3 | | 8 | |
| Bisabolol Oxide A 50µg/µL (1) | 0 | 0,00% | 1 | 6,67% | 1 | 6,67% | 3 | 20,00% |
| Bisabolol Oxide A 50µg/µL (2) | 0 | | 1 | | 1 | | 3 | |
| Bisabolol Oxide A 5µg/µL (3) | 0 | | 0 | | 0 | | 0 | |
| Bisabolol Oxide A 10µg/µL (1) | 0 | 0,00% | 0 | 0,00% | 0 | 0,00% | 1 | 3,33% |
| Bisabolol Oxide A 10µg/µL (2) | 0 | | 0 | | 0 | | 0 | |
| Bisabolol Oxide A 10µg/µL (3) | 0 | | 0 | | 0 | | 0 | |
| Bisabolol Oxide A 1µg/µL (1) | 1 | 3,33% | 1 | 3,33% | 1 | 3,33% | 1 | 3,33% |
| Bisabolol Oxide A 1µg/µL (2) | 0 | | 0 | | 0 | | 0 | |
| Bisabolol Oxide A 1µg/µL (3) | 0 | | 0 | | 0 | | 0 | |

**Table 4: Bee mortality with bisabolol oxide A**

| | Bee mortality | | | | | | | |
|---|---|---|---|---|---|---|---|---|
| Modality | 5 min | Mean | 2 H | Mean | 4 H | Mean | 24 H | Mean |
| Negative control (1) | 0 | 0,00% | 0 | 0,00% | 0 | 0,00% | 0 | 0,00% |
| Negative control (2) | 0 | | 0 | | 0 | | 0 | |
| Ethanol solvent (1) | 0 | 0,00% | 1 | 3,33% | 1 | 3,33% | 2 | 10,00% |
| Ethanol solvent (2) | 0 | | 0 | | 0 | | 1 | |
| Ethanol solvent (3) | 0 | | 0 | | 0 | | 0 | |
| Bisabolol Oxide A 100µg/µL (1) | 0 | 0,00% | 0 | 0,00% | 0 | 0,00% | 0 | 0,00% |
| Bisabolol Oxide A 100µg/µL (2) | 0 | | 0 | | 0 | | 0 | |
| Bisabolol Oxide A 100µg/µL (3) | 0 | | 0 | | 0 | | 0 | |
| Bisabolol Oxide A 50µg/µL (1) | 0 | 0,00% | 0 | 0,00% | 0 | 0,00% | 0 | 0,00% |
| Bisabolol Oxide A 50µg/µL (2) | 0 | | 0 | | 0 | | 0 | |
| Bisabolol Oxide A 50µg/µL (3) | 0 | | 0 | | 0 | | 0 | |
| Bisabolol Oxide A 10µg/µL (1) | 0 | 0,00% | 1 | 6,67% | 1 | 6,67% | 1 | 6,67% |
| Bisabolol Oxide A 10µg/µL (2) | 0 | | 1 | | 1 | | 1 | |
| Bisabolol Oxide A 10µg/µL (3) | 0 | | 0 | | 0 | | 0 | |
| Bisabolol Oxide A 1µg/µL (1) | 1 | 3,33% | 1 | 3,33% | 1 | 3,33% | 1 | 3,33% |
| Bisabolol Oxide A 1µg/µL (2) | 0 | | 0 | | 0 | | 0 | |
| Bisabolol Oxide A 1µg/µL (3) | 0 | | 0 | | 0 | | 0 | |

### REFERENCES

[1] Macedo, P. A., WU, J., and ELLIS, Marion D. Using inert dusts to detect and assess varroa infestations in honey bee colonies. Journal of Apicultural Research, 2002, vol. 41, n°1-2, p. 3-7
[2] Kretzschmar A. (2016). APIMODEL, modélisation fonctionnelle de l'activité des colonies d'abeilles pour caractériser des seuils de dysfonctionnement à l'échelle du rucher. Généralisation à partir de la miellée sur lavandes. INRA-BioSP, Avignon. http://w3.avignon. inra.fr/lavandes/biosp/rapportfinal2016.pdf

## Claims

1. Bisabolol or a stereoisomer thereof for use as a miticide agent.

2. The compound for use according to claim 1, wherein the bisabolol or stereoisomer thereof is selected from the group consisting of a compound of Formula (I), bisabolol oxide A, CAS Registry Number 22567-36-8, and bisabolol oxide B, CAS Registry Number 55399-12-7, 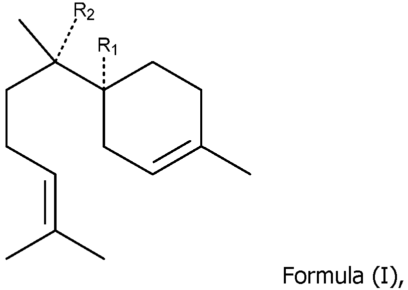 (R1, R2) represents (H, OH) or (OH, H).

3. The compound for use according to any of the preceding claims, wherein the bisabolol or stereoisomer thereof is a compound selected from the group comprising:
- α-bisabolol;
- (R,R)-α-bisabolol;
- (+)-(αR,1R)-α-bisabolol;
- (-)-(αS,1S)-α-bisabolol;
- (R,S)-α-bisabolol;
- (+)-(αS,1R)-α-bisabolol;
- (-)-(αR,1S)-α-bisabolol;
- β-bisabolol;
- (R,R)-β-bisabolol;
- (1R,βR)-β-bisabolol;
- (1S,βS)-β-bisabolol;
- (R,S)-β-bisabolol;
- (1R,βS)-β-bisabolol;
- (1S,βR)-β-bisabolol;
- Bisabolol oxide A; and
- Bisabolol oxide B.

4. The compound for use according to any of the preceding claims, wherein the bisabolol is α-bisabolol.

5. The compound for use according to any of the preceding claims, wherein the bisabolol is bisabolol oxide A.

6. The compound for use according to claim 1, for reducing or preventing a mite infestation in an animal such as a bee.

7. The compound for use according to any of the preceding claims, wherein the mite is (i) *varroa* mite, such as *varroa destructor,* or (ii) *Tropilaelaps spp.,* such as *Tropilaelaps clareae.*

8. Use of bisabolol or a stereoisomer thereof, as defined in any of claims 1 to 7, as a miticide agent.

9. Use according to claim 8, for reducing or preventing a mite infestation in an animal, such as a bee.

10. Method for reducing or preventing a mite infestation in an animal, such as a bee, comprising exposing the animal to bisabolol or a stereoisomer thereof, as defined in any of claims 1 to 7.

11. Use or method according to any of claims 8 to 10, wherein the mite is (i) *varroa* mite, such as *varroa destructor,* or (ii) *Tropilaelaps spp.,* such as *Tropilaelaps clareae or Tropilaelaps mercedesae.*

12. Composition adapted for use as a miticide agent, said composition comprising (i) bisabolol or a stereoisomer thereof, as defined in any of claims 1 to 7, (ii) one or more attractant(s) for bees, and eventually (iii) one or more polymer(s) selected from the group consisting in a plastic material, a rubber, an adhesive, a resin and polyholoside fibers.

13. Strip adapted for use in apiculture, comprising (i) bisabolol or a stereoisomer thereof, as defined in any of claims 1 to 7, or (ii) a composition according to claim 12.

14. Beehive comprising (i) bisabolol or a stereoisomer thereof as defined in any of claims 1 to 7, (ii) a composition according to claim 12, and/or (iii) a strip according to claim 13.
